# EUROPEAN PATENT APPLICATION

(11) **EP 4 818 746 A1**
(43) Date of publication of application: **07.10.2026**
(21) Application number: 24898137.5
(22) Date of filing: 27.11.2024
(51) Int. Cl.: G01S 7/481, G01S 7/00, H02K 5/04, H02K 7/08, H02K 7/00, H02K 11/22, H02J 50/10, H04B 10/112, H04B 10/40

(54) **LIDAR DRIVING DEVICE AND LIDAR DEVICE**

(30) Priority: 29.11.2023 KR 20230168921
(71) Applicant: LG Innotek Co., Ltd., Seoul 07796 (KR)
(72) Inventor: PARK, Young Dae, Seoul 07796 (KR)
(74) Representative: Plasseraud IP
(86) International application number: PCT/KR2024/019045
(87) International publication number: WO 2025/116543

(57) **Abstract**

A LIDAR driving device disclosed in embodiments includes: a base; a first circuit board disposed on the base; a stator housing disposed on the first circuit board; and a rotor housing disposed on the stator housing and a second circuit board disposed on the rotor housing; and a rotating portion including a rotor housing disposed on the stator housing and a second circuit board disposed on the rotor housing, and rotating with respect to the stator housing, wherein the rotor housing includes a shaft protruding toward the first circuit board, disposed at an innermost side of the stator housing, and having a hollow, and at least one of the first circuit board and the second circuit board may include an optical communication portion performing optical communication through the hollow of the shaft.

## Description

### Technical field

The invention relates to a LIDAR driving device and a LIDAR device. The invention relates to a vehicle having a LIDAR device including a rotatable sensor unit and a fixed fixed portion.

### Background Art

An autonomous vehicle (AV) uses a plurality of sensors for situation recognition. Sensors that are part of a self-driving system (SDS) of an autonomous vehicle may include one or more of a camera, a LIDAR (Light Detection and Ranging) device, and an inertial measurement unit (IMU). Sensors such as cameras and LIDAR are used to capture and analyze surrounding scenes of the vehicle. The captured scenes are then used to detect objects including static objects such as fixed structures and dynamic objects such as pedestrians and other vehicles. In addition, data collected from the sensors may be used to detect conditions such as road markings, lane curvature, traffic lights, and signs. Furthermore, a scene representation such as a three-dimensional point cloud obtained from the LIDAR of the vehicle may be combined with one or more images obtained from a camera to obtain additional insight into a scene or situation around the vehicle.

In addition, a LIDAR transceiver may include a transmitter that transmits light in ultraviolet (UV), visible light, and infrared spectral regions, and one or more photodetectors that convert light or other electromagnetic radiation into electrical signals. In order to provide high-fidelity object detection and tracking, an optical sensor such as LIDAR requires rigidly fixed optical components, and sufficient space for one or more transceiver assemblies, processing and driver circuits, cooling elements, cleaning elements, wiring, and motor assemblies. The LIDAR may also include transceiver components rigidly fixed relative to each other in order to withstand automotive-grade vibration, high-speed rotation of a mechanical LIDAR assembly, and to address balance and weight considerations. In addition, sufficient packaging accommodation is required for the LIDAR, and aesthetic considerations should also be taken into account.

### Summary of Invention

### Technical Problem

An embodiment of the invention may provide a LIDAR driving device and a LIDAR device including a transceiver, a wireless power transmission module, a wireless data communication module, and a motor.

The embodiment of the invention may provide a LIDAR driving device and a LIDAR device including a rotating portion rotating together with a transceiver that irradiates and senses a laser beam, and a fixed portion supporting rotation of the rotating portion. The embodiment of the invention may provide a LIDAR driving device and a LIDAR device in which a rotatable rotor housing having a hollow shaft is coupled inside a fixed stator housing, and communication portions are coupled to both sides of the hollow shaft.

The embodiments of the invention may provide a LIDAR driving device and a LIDAR device in which a plurality of bearing members is disposed in a vertical direction on an outer side of a hollow shaft of a rotatable rotor housing, and outer raceways of the plurality of bearing members are supported by an inner wall of the stator housing.

The embodiments of the invention may provide a LIDAR driving device and a LIDAR device in which a plurality of bearing members is disposed in a vertical direction on an outer side of a hollow shaft of a rotatable rotor housing, and an elastic member providing elasticity to at least one of the plurality of bearing members is provided.

### Solution to Problem

A LIDAR driving device according to an embodiment of the invention may comprise: a base; a first circuit board disposed on the base; a stator housing disposed on the first circuit board; and a rotating portion including a rotor housing disposed on the stator housing and a second circuit board disposed on the rotor housing, and rotating with respect to the stator housing, wherein the rotor housing includes a shaft protruding toward the first circuit board, disposed at an innermost side of the stator housing, and having a hollow, and at least one of the first circuit board and the second circuit board may include an optical communication portion performing optical communication through the hollow of the shaft.

According to an embodiment of the invention, the optical communication portion may include a first communication portion having a first light emitting portion and a first optical sensor disposed at the first circuit board and disposed at a lower portion of the shaft, and a second communication portion having a second light emitting portion and a second optical sensor disposed at the second circuit board and disposed within the hollow of the shaft, wherein the first optical sensor may receive an optical signal from the second light emitting portion, and the second optical sensor may receive an optical signal from the first light emitting portion.

According to an embodiment of the invention, at least one of the first light emitting portion and the first optical sensor may at least partially overlap the hollow of the shaft in a direction perpendicular to a direction in which the shaft protrudes.

According to an embodiment of the invention, the rotor housing may rotate based on a virtual rotation axis disposed within the hollow of the shaft.

According to an embodiment of the invention, the LIDAR driving device may include a bearing member disposed between the stator housing and the rotor housing, wherein the shaft, the bearing member, and the stator housing may be sequentially disposed in an outward direction from the rotation axis.

According to an embodiment of the invention, the bearing member may include a first bearing member and a second bearing member sequentially disposed from an outer upper end of the shaft toward the first circuit board, and a width of the first bearing member may be greater than a width of the second bearing member.

According to an embodiment of the invention, an outer circumferential surface of the shaft may include a groove accommodating the bearing member. According to an embodiment of the invention, the bearing member may be disposed between the shaft and the stator housing.

According to an embodiment of the invention, the LIDAR driving device may include: an encoder disk coupled to a lower circumference of the shaft; and a sensor disposed on the first circuit board, facing the encoder disk, and sensing an azimuth angle.

According to an embodiment of the invention, a lower end of the shaft may be spaced apart from an upper surface of the first circuit board, and a gap between the first circuit board and the lower end of the shaft may be smaller than a maximum thickness of the communication portion.

According to an embodiment of the invention, a rotation axis of the rotor housing may be the same as a central axis of the shaft. According to an embodiment of the invention, the second circuit board may be disposed on the rotor housing and may rotate together with the rotor housing. According to an embodiment of the invention, the LIDAR driving device may include a motor coupled to the stator housing and the rotor housing and rotating the rotor housing about an axis.

According to an embodiment of the invention, the stator housing may include: an extension portion extending from an outer wall toward the shaft of the rotor housing; a first fixed sidewall protruding from the extension portion toward the rotor housing or upwardly; and a second fixed sidewall protruding from the first fixed sidewall toward the base, wherein the rotor housing includes a rotating sidewall at a lower circumference thereof and has a disk shape at an upper circumference of the hollow shaft, and the motor may be disposed between the first fixed sidewall and the rotating sidewall.

According to an embodiment of the invention, the LIDAR driving device may include a wireless power transmission module coupled to the stator housing and the rotor housing, wherein the wireless power transmission module may include a wireless power transmitting portion disposed on an outer circumference of the extension portion of the stator housing, and a wireless power receiving portion disposed at an outer lower portion of the rotor housing.

According to an embodiment of the invention, the bearing member may include a first bearing member coupled between the first fixed sidewall and the hollow shaft, and a second bearing member coupled between the second fixed sidewall and the hollow shaft.

A LIDAR device according to an embodiment of the invention comprise: a transceiver including a light emitting portion emitting an optical signal and a light receiving portion receiving the optical signal reflected from an object; and a driving device controlling rotation of the transceiver, wherein the driving device includes: a first circuit board including a first light emitting portion emitting a first optical signal and a first optical sensor receiving a second optical signal; a second circuit board including a second optical sensor receiving the first optical signal and a second light emitting portion emitting the second optical signal, and electrically connected to the transceiver; a shaft disposed between the first circuit board and the second circuit board, fixed together with the second circuit board, and spaced apart from the first circuit board; a stator housing having the first circuit board; a rotor housing having the shaft and supporting the second circuit board; and a bearing member, a wireless power transmission module, and a motor respectively disposed between the stator housing and the rotor housing, wherein the shaft has a hollow, the first light emitting portion and the first optical sensor are disposed at a lower portion of the shaft, and the second light emitting portion and the second optical sensor may be disposed within the hollow of the shaft.

### Advantageous Effects of Invention

According to an embodiment of the invention, by providing a protrusion coupled to a bearing member in a rotating housing integrally having a hollow shaft, a structure not requiring coupling of a separate shaft may be provided, the configuration of components may be reduced, and assembly between components may be facilitated.

According to an embodiment of the invention, by providing a rotating housing integrally having a hollow shaft, assembly errors between the shaft and the rotating housing may be reduced, dispersion of a rotation center may be reduced, and deterioration of LIDAR performance may be prevented.

According to an embodiment of the invention, by providing a guide wall in a vertical direction of the fixed housing, heat-generating components may be separated and a heat dissipation path may be provided. Accordingly, deterioration of performance of the LIDAR device may be prevented, and operational reliability at high temperatures may be improved.

### Brief Description of Drawings

FIG. 1 is a perspective view of a vehicle having a LIDAR system according to an embodiment of the invention.
FIG. 2 is an example of a block diagram of a vehicle system having the LIDAR system of FIG. 1.
FIG. 3 is an exploded perspective view of a LIDAR driving device according to an embodiment of the invention.
FIG. 4 is a coupled perspective view of a stator housing and a rotor housing as a lower configuration of the LIDAR driving device of FIG. 3.
FIG. 5 is an exploded perspective view of lower configurations of the LIDAR driving device of FIG. 4.
FIG. 6 is an example of a side cross-sectional view of lower configurations of the LIDAR driving device of FIG. 4.
FIG. 7 is a perspective view illustrating a coupled cross-section of the rotor housing and the second substrate of FIG. 5.
FIG. 8 is a view illustrating configurations disposed inside the stator housing of FIG. 5 and a detailed configuration of the base.
FIG. 9 is an example of a side cross-sectional view of the lower configuration of the LIDAR driving device of FIG. 4.
FIG. 10 is another side cross-sectional view of the lower configuration of the LIDAR driving device of FIG. 4.
FIG. 11 is an enlarged view illustrating a coupled state of the stator housing, the rotor housing, the hollow shaft, the second substrate, the second communication portion, and the first and second bearing members of FIG. 4.
FIG. 12 is an enlarged view illustrating a coupled state of the stator housing, the rotor housing, the hollow shaft, the first substrate, the first communication portion, and the second bearing member of FIG. 4.
FIG. 13 is an exploded perspective view of FIG. 7.
FIG. 14 is a perspective view of the stator housing of FIG. 5.
FIG. 15 is a perspective view of the base of FIG. 5.
FIG. 16 is a view illustrating another example of FIG. 9.

### Description of Embodiments

Hereinafter, embodiments will be described in detail with reference to the accompanying drawings in which like reference numerals refer to like elements. However, the invention may be implemented in various different forms and is not limited to the embodiments illustrated herein. Rather, these embodiments are provided so that this disclosure will be thorough and complete, and will fully convey the features and functions of the invention to those skilled in the art. Accordingly, processes, elements, and techniques that are not necessary for a person having ordinary skill in the art to fully understand the features and functions of the invention may not be described. Unless otherwise stated, like reference numerals indicate like elements in the accompanying drawings and the written description, and thus descriptions thereof will not be repeated.

A LIDAR system may be referred to as a depth detection system, a laser ranging system, a laser radar system, a LIDAR system, or a laser/optical detection and ranging (LADAR) system. LIDAR is a type of distance measurement sensor characterized by a long sensing range, high resolution, and low interference from the environment. LIDAR has been widely applied in intelligent robots, unmanned aerial vehicles, autonomous driving, or self-driving fields. The operating principle of LIDAR is to estimate a distance based on a round-trip time of electromagnetic waves (for example, time of flight or delay time) between a source and a target. A LIDAR system measures a distance (for example, depth) to an object by emitting a light pulse (for example, a laser pulse) toward the object and measuring a time taken for the light pulse to be reflected from the object and detected by a sensor of the LIDAR system.

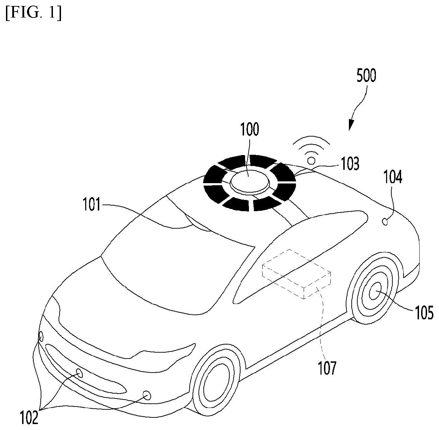

The above-described aspects and features of embodiments of the invention will be described in more detail with reference to the drawings. FIG. 1 is a perspective view of a vehicle having a LIDAR system according to an embodiment of the invention.

Referring to FIG. 1, a mobile body such as a vehicle 500 may include a LIDAR system 100, a camera unit 101, vehicle recognition sensors 102 and 104, a global positioning system (GPS) sensor 103, a vehicle control module 107, and an ultrasonic sensor 105.

The LIDAR system 100 is a device having a rotating imaging portion or sensor portion, is coupled to a portion of the vehicle 500, rotates 360 degrees, senses and measures a distance between the vehicle and an object, such as a static object or a dynamic object, surrounding environments, and shapes, and controls driving using measured data. Surrounding objects or environments of the vehicle may be collected and analyzed as a three-dimensional point cloud using such sensing technology, and sensing data providing information on objects or the like located within an appropriate proximity range may be generated.

The LIDAR system 100 may communicate with the vehicle control module 107, and may transmit and receive information according to driving of the vehicle. The vehicle control module 107 may communicate with various systems or sensors inside the vehicle and may perform various controls. The vehicle control module 107 is a device for controlling and monitoring various systems of the vehicle, and may include a control device such as an electronic control unit (ECU). The vehicle control module 107 may communicate with an external mobile device and may be electrically connected to a removable storage device.

The camera unit 101 may be mounted in one or more units inside and/or outside the vehicle, may capture an image in front of and/or behind the traveling vehicle, and may provide or store the image through a display device, not shown. The captured image data may selectively include audio data. As another example, the camera unit 101 may be mounted at the front, rear, each corner, or each side of the vehicle 500, may capture surrounding images of the vehicle, and may provide the images through a display device, not shown. The vehicle control module 107 or another processor may identify traffic lights, vehicles, pedestrians, and the like based on data captured by the camera unit 101, and may provide acquired information to a driver. Such a camera unit 101 may be used as a driving assistance device.

A plurality of front radars 102 are installed at the front of the vehicle 500 and sense a distance between the vehicle 500 and a front object. A plurality of rear radars 104 are installed at the rear of the vehicle 500 and sense a distance between the vehicle 500 and a rear object. When there is object information sensed through the radars 102 and 104, surrounding objects or obstacles are detected and notified to the driver by an alarm or a warning message. The GPS sensor 103 may receive a signal from a satellite and provide the signal to devices such as the vehicle control module 107, the LIDAR system 100, and the camera unit 101, and the devices may provide or calculate information such as a position, speed, and time of the vehicle based on a GPS position signal. The ultrasonic sensor 105 may sense a distance to a nearby vehicle or obstacle, thereby providing convenience so that the vehicle may be safely parked in a parking space. In addition, the ultrasonic sensor 105 may prevent accidents that may occur during driving. Such an ultrasonic sensor 105 may be installed at the rear or side of the vehicle, on a wheel, or the like.

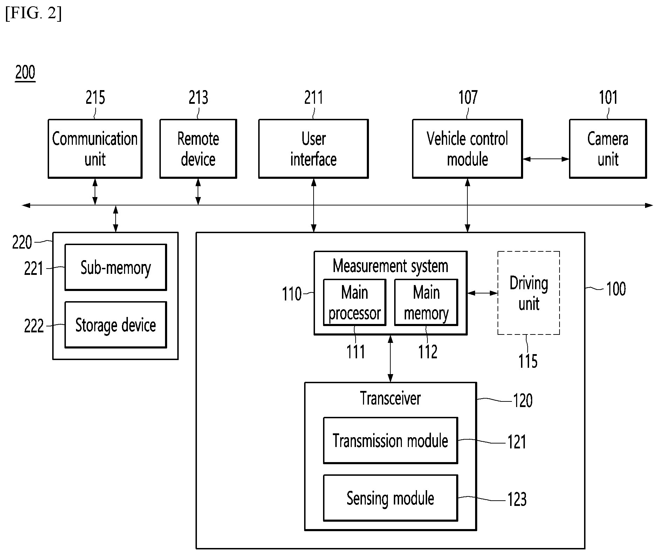

As illustrated in FIG. 2, a vehicle system 200 having the LIDAR system 100 and the vehicle control module 107 receives an input from a user or driver through a user interface 211 or provides information to the user or driver. The user interface 211 may include a display device, a touch panel, a button, voice recognition, and a wired or wireless input device, and may be connected by wire or wirelessly to enable communication between the driver and various devices.

The vehicle system 200 communicates with a remote device 213, and the remote device 213 may remotely communicate with a user or the outside or may receive an external control signal. A communication portion 215 may support wired or wireless communication, and may be, for example, a wired or wireless module. The storage unit 220 may include one or more sub-memories 221 therein. In addition, the storage unit 220 may include a portable or removable storage device 222. The LIDAR system 100 may communicate with the user interface 211 and the camera unit 101.

The LIDAR system 100 includes a driving unit 115 such as a motor, and the driving unit 115 may rotate a part or all of the LIDAR system 100 by 360 degrees according to a control signal. The driving unit 115 includes a portion fixed to a mobile body such as a vehicle, for example, a stator, and a portion rotating together with a sensor device, for example, a rotor, communicates with an internal configuration of the LIDAR system 100, for example, a measurement system 110, and enables the LIDAR system 100 to rotate about an axis. The LIDAR system 100 may include the measurement system 110 and at least one transceiver 120. The driving unit 115 may be coupled to allow the measurement system 110 and the transceiver 120 to rotate and may transmit driving force.

The measurement system 110 may include a main processor 111 and a main memory 112, and the main processor 111 may be implemented as a general-purpose processor, an application specific integrated circuit (ASIC), one or more field programmable gate arrays (FPGAs), a group of processing components, or other suitable electronic processing components. The main memory, for example, a memory, a memory unit, a storage device, or the like, 112 may include one or more devices, for example, RAM, ROM, flash memory, hard disk storage, or the like, for storing data and/or computer code for completing or facilitating various processes described in the invention. The main memory 112 may be or may include volatile memory or non-volatile memory. The main memory 112 may include a database component, an object code component, a script component, or any other type of information structure to support various activities and information structures described in the invention. According to an embodiment, the main memory 112 may be communicably connected to the main processor 111.

The measurement system 110 may include one or more processors, also referred to as a central processing unit (CPU). The one or more processors may be connected to a communication infrastructure or bus. In addition, the one or more processors may each be a graphics processing unit (GPU). In some examples, the GPU may include a processor, which is a special electronic circuit designed to process mathematically intensive application programs. The GPU may have a parallel structure efficient for parallel processing of large data blocks, such as mathematically intensive data commonly used in computer graphics applications, images, videos, and the like. The measurement system 110, as a computer system, may be connected to one or more user input/output devices, such as a monitor, a keyboard, and a pointing device, communicating with the communication infrastructure through a user input/output interface.

Within the LIDAR system 100, the transceiver 120 may be disposed singly or in plural. When a plurality of transceivers is disposed, laser beams may be irradiated and sensed in different directions based on a rotation axis. Here, the different directions may range from 10 degrees to 180 degrees relative to each other, and may be arranged at any one of, for example, 30 degrees, 60 degrees, 90 degrees, 120 degrees, 150 degrees, and 180 degrees, and preferably may be arranged at an angle of 180 degrees. The plurality of transceivers may have different divergence angles or fields of view. The plurality of transceivers may scan objects at different elevations.

The transceiver 120 includes a transmission module 121 and a sensing module 123, and the transmission module 121 transmits a laser beam, and the sensing module 123 senses the laser beam transmitted by the transmission module 121. The transmission module 121 may include a light source array, not shown, and the sensing module 123 may include a receiving optical system, not shown, and a sensor array, not shown. The transmission module 121 may include a processor or a control module, such as a general-purpose processor, ASIC, or FPGA, capable of controlling driving of the light source array and transmission of optical signals, and may also include an internal memory storing code for controlling generation of laser beams.

The light source array may include a plurality of light sources generating laser beams or optical pulses. The light sources may include light sources such as a laser diode (LD), an edge emitting laser, a vertical-cavity surface emitting laser (VCSEL), a distributed feedback laser, a light emitting diode (LED), and a super luminescent diode (SLD). However, the invention is not limited thereto. The sensing module 123 may convert a raw histogram based on signals sensed through the receiving optical system, and may include a processor having a matching filter, a peak detection circuit, and a SPAD saturation and quenching circuit. Such a processor may be implemented as a general-purpose processor, an application specific integrated circuit (ASIC), one or more field programmable gate arrays (FPGAs), a group of processing components, or another suitable electronic processing component. The sensing module 123 may include a memory (not shown), having one or more devices, for example, RAM, ROM, flash memory, hard disk storage, or the like, for storing internally detected optical signals.

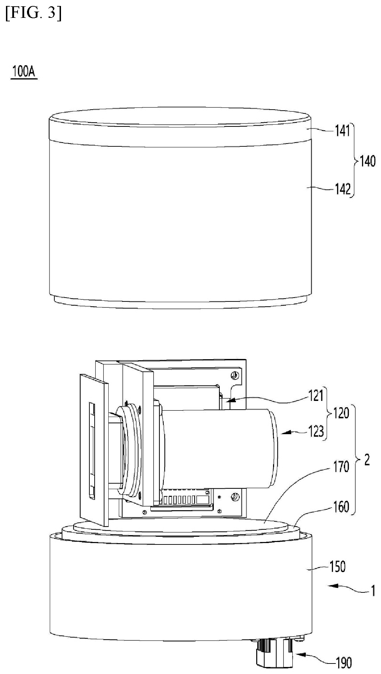

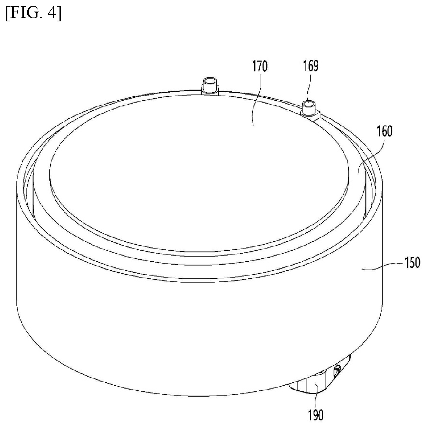

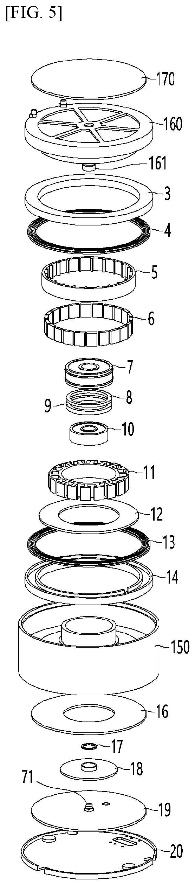

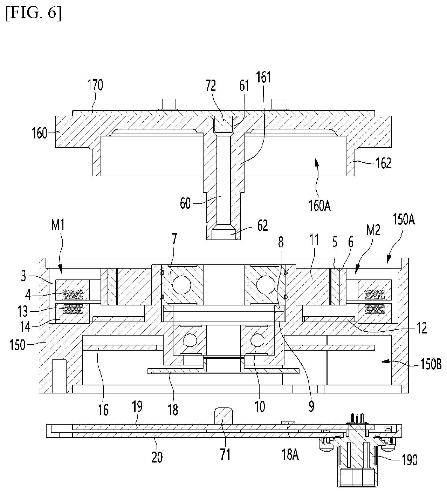

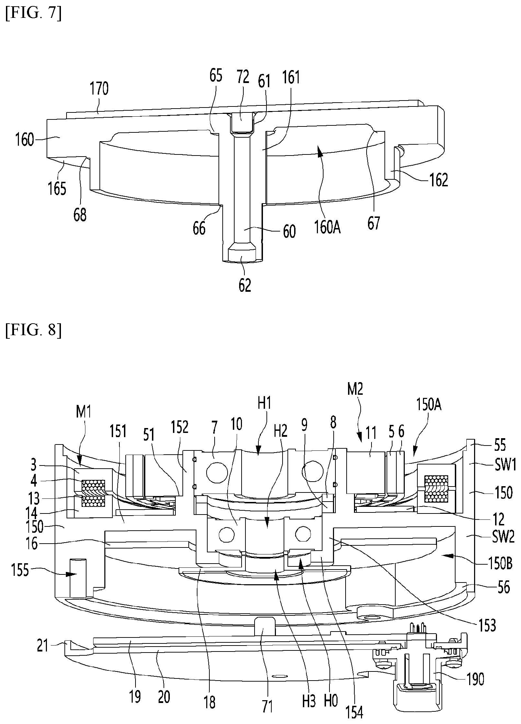

Hereinafter, a LIDAR device having a LIDAR system will be described with reference to the drawings. FIG. 3 is an exploded perspective view of a LIDAR driving device according to an embodiment of the invention, FIG. 4 is a coupled perspective view of a stator housing 150 and a rotor housing 160 as a lower configuration of the LIDAR driving device of FIG. 3, FIG. 5 is an exploded perspective view of lower configurations of the LIDAR driving device of FIG. 4, FIG. 6 is an example of a side cross-sectional view of lower configurations of the LIDAR driving device of FIG. 4, FIG. 7 is a perspective view illustrating a coupled cross-section of the rotor housing and the second substrate of FIG. 5, and FIG. 8 is a view illustrating configurations disposed inside the stator housing of FIG. 5 and a detailed configuration of the base.

As illustrated in FIGS. 3 to 5, the LIDAR driving device 100A may include a fixed portion 1, a rotating portion 2, and a cover 140. The fixed portion 1 is coupled to a portion of a mobile body such as a vehicle, and may be embedded within the mobile body or may protrude from the mobile body. The fixed portion 1 may include a base 20, a stator housing 150, and a first circuit board 19. The stator housing 150 and the base 20 may be separated from each other or integrally formed, and the base 20 may be fastened to the mobile body by fastening means such as screws.

The rotating portion 2 may rotate on the mobile body by driving force of a motor M2. Rotation of the rotating portion 2 may be axial rotation. The rotating portion 2 may include the transceiver 120, a rotatable rotor housing 160, and a second circuit board 170. The transceiver 120 may axially rotate together with the rotor housing 160. The second circuit board 170 is electrically connected to the transceiver 120 and may be wirelessly connected to the first circuit board 19. The second circuit board 170 may be disposed on the rotor housing 160 and disposed at a lower portion of the transceiver 120. A rotation axis of the rotor housing 160 may be the same as a central axis of the shaft 161. The hollow 60 of the shaft 161 may be a virtual rotation axis. Accordingly, the rotor housing 160 rotates using the shaft 161 as the rotation axis.

A lower portion of the cover 140 is coupled to an upper circumference of the fixed portion 1 and covers an upper portion and an outer circumference of the rotating portion 2. The cover 140 has a column shape with an open lower portion and includes an upper cover 141 and a lower cover 142. The upper cover 141 has an opaque material and protects the upper portion of the rotating portion 2. The lower cover 142 covers a circumference of the transceiver 120 and may include a transparent material for transmission and reception of laser beams. The cover 140 is coupled to the stator housing 150 and may be provided in a non-rotating structure. As another example, the cover 140 or the lower cover 142 may be coupled to the rotor housing 160 and may rotate. In this case, the lower cover 142 may include a window or an open region for transmission and reception of laser beams of the transceiver 120. In this case, the window or open region may correspond to a transmission/reception direction of light transmitted/received from the transceiver 120, and other regions may be formed of an opaque material. The cover 140 may be made of metal, or a non-metal material such as resin or plastic, or may include a waterproof material.

As illustrated in FIG. 4, an upper portion of the rotor housing 160 may include fastening protrusions 169 so as to be coupled to a portion of the transceiver 120. The second circuit board 170 may be coupled to the upper portion of the rotor housing 160, and a diameter of the second circuit board 170 may be smaller than a diameter of the rotor housing 160. A diameter of the rotor housing 160 may be smaller than a diameter of the stator housing 150. An outer shape of the stator housing 150 may be cylindrical, and as another example, may have a polygonal shape.

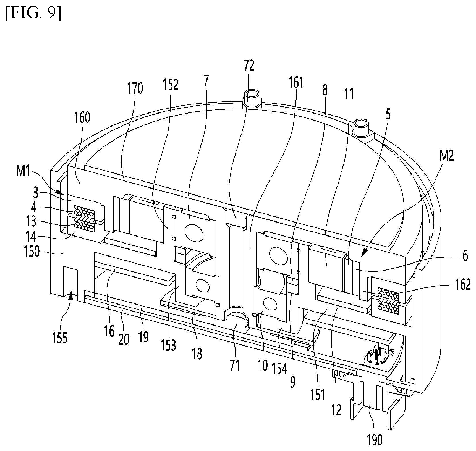

As illustrated in FIGS. 5 to 10, the LIDAR device may include a base 20, a first circuit board 19, encoder modules 18 and 18A, a fixing ring 17, a first sub-board 16, a stator housing 150, first and second ferrite cores 14 and 3, first and second coils 13 and 4, a second sub-board 12, a motor core 11, first and second bearing members 7 and 10, first and second elastic members 8 and 9, magnets 6, a yoke 5, a rotor housing 160, and a second circuit board 170. The rotor housing 160 has a disk shape and supports a lower portion of the second circuit board 170. The base 20 has a disk shape and supports a lower portion of the first circuit board 19.

Here, the wireless power transmission module M1 wirelessly transmits power from the fixed portion 1 to the rotating portion 2. The wireless power transmission module M1 is coupled inside the stator housing 150 and the rotor housing 160 and may face each other. The wireless power transmission module M1 may include the first and second ferrite cores 14 and 3 and the first and second coils 13 and 4. The first ferrite core 14 and the first coil 13 are a wireless power transmitting portion, and the second ferrite core 3 and the second coil 4 function as a wireless power receiving portion. The wireless power transmitting portion 13 and 14 of the wireless power transmission module M1 wirelessly transmits power within the fixed portion 1, and the wireless power receiving portion 3 and 4 wirelessly receives power within the rotating portion 2 and supplies power to respective components within the rotating portion 2. The wireless power transmission module M1 may enable operation of the transceiver 120 and boards and systems connected thereto. The wireless power transmitting portion 13 and 14 is coupled within the stator housing 150, and the wireless power receiving portion 3 and 4 may be coupled to the rotor housing 160. The wireless power transmission module M1 is disposed on an outer circumference among regions of the stator housing 150 and the rotor housing 160, wirelessly transmits and receives power, and may reduce electrical influence on other configurations, for example, a motor, or components.

The LIDAR driving device 100A includes a motor M2 therein for rotation of the rotating portion 2. The motor M2 may include a plurality of magnets 6, a yoke 5, and a motor core 11. The yoke 5 of the motor M2 is disposed along outer sides of the plurality of magnets 6 and shields electromagnetic force. The yoke 5 functions as a back yoke. The yoke 5 and the plurality of magnets 6 are arranged in a circumferential direction, and the motor core 11 faces the plurality of magnets 6. When power is supplied to a coil of the motor core 11, electromagnetic force is generated between the magnets 6 and the motor core 11. The yoke 5 and the plurality of magnets 6 may axially rotate together with the rotor housing 160.

The first circuit board 19 is coupled on the base 20, and the first circuit board 19 includes a first communication portion 71. The base 20 is coupled to a lower circumference of the stator housing 150. Inside the stator housing 150, a first sub-board 16 fixed to the stator housing 150 is provided, and at least one of the first circuit board 19 and the first sub-board 16 is electrically connected to a power connector 190 and may receive power.

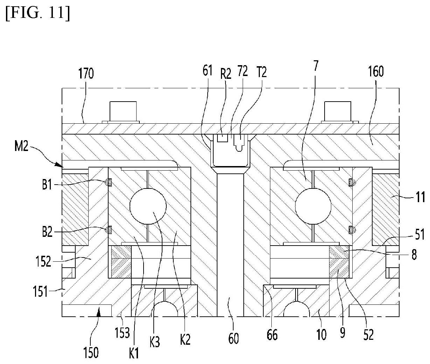

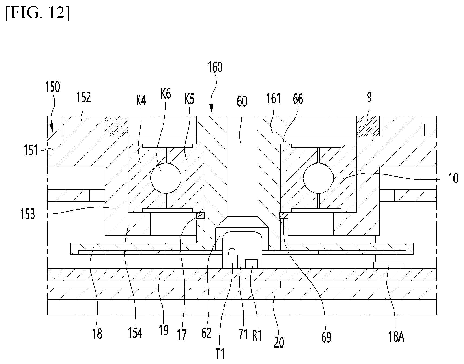

The second circuit board 170 includes a second communication portion 72 at a central lower portion thereof and communicates with the first communication portion 71. The first and second communication portions 71 and 72 are disposed a lower portion and an upper portion of the hollow shaft 161, face each other in a vertical direction or axial direction, and is wirelessly communicate with each other. The first and second communication portions 71 and 72 may be defined as optical communication portions wirelessly communicating with each other. As illustrated in FIGS. 11 and 12, the first communication portion 71 may include a first light emitting portion T1 and a first optical sensor R1, and the second communication portion 72 may include a second light emitting portion T2 and a second optical sensor R2. At least one of the first light emitting portion T1 and the first optical sensor R1 may overlap the shaft 161 and the hollow 60 in a direction in which the shaft 161 protrudes. In addition, at least one or both of the first light emitting portion T1 and the first optical sensor R1 may at least partially overlap the hollow 60 of the shaft 161 in a direction perpendicular to a direction in which the shaft 161 protrudes. At least one or both of the second light emitting portion T2 and the second optical sensor R2 may at least partially overlap the hollow 60 of the shaft 161 in a direction perpendicular to a direction in which the shaft 161 protrudes.

The shaft 161 may be integrally formed or bent at a lower portion of the central inner of the rotor housing 160. A vertical length of the shaft 161 may be greater than a sum of thicknesses of the first and second bearing members 7 and 10. The vertical length of the shaft 161 may be greater than a maximum distance between the first and second bearing members 7 and 10, that is, a distance between an upper surface of the first bearing member and a lower surface of the second bearing member. Accordingly, a lower end of the shaft 161 may protrude lower than a lower surface of the second bearing member 10 or may be disposed adjacent to the first circuit board 19.

As illustrated in FIG. 8, the stator housing 150 is a first frame having a fixed position, includes a metal material, and may include, for example, an aluminum material or an alloy thereof. An outer wall of the stator housing 150 includes an upper outer wall SW1 and a lower outer wall SW2 for guiding insertion of internal components. The upper outer wall SW1 and the lower outer wall SW2 have upper and lower first and second accommodation regions 150A and 150B, respectively, and components may be accommodated inwardly into the first accommodation region 150A from an upper direction, and components may be accommodated inwardly into the second accommodation region 150B from a lower direction.

The stator housing 150 is a fixed second frame and includes an extension portion 151 extending from the outer wall toward the hollow shaft 161 of the rotor housing 160, a first fixed sidewall 152 protruding from the extension portion 151 toward the second circuit board 170, and a second fixed sidewall 153 protruding from an inner end of the extension portion 151 toward the first circuit board 19.

The first fixed sidewall 152 has a ring shape, and a first accommodation region 150A having an open upper portion is provided between the first fixed sidewall 152 and the outer wall of the stator housing 150. The second fixed sidewall 153 has a ring shape, and a second accommodation region 150B having an open lower portion is provided between the second fixed sidewall 153 and the outer wall of the stator housing 150. An inner end 154 of the second fixed sidewall 153 protrudes toward the hollow shaft 161. A second sub-board 12 is disposed on the extension portion 151 of the stator housing 150, and the second sub-board 12 may be disposed in an accommodation region between the first fixed sidewall 152 and the outer wall of the stator housing 150. The second sub-board 12 may be electrically connected to the wireless power transmitting portion 13 and 14 and the motor core 11. The extension portion 151 of the stator housing 150 extends inwardly from the outer wall of the stator housing 150, and a support protrusion 51 is disposed on an outer circumference of the first fixed sidewall 152, and the support protrusion 51 supports an inner lower end of the motor core 11. The extension portion 151 of the stator housing 150 may extend in a direction orthogonal to an extension direction of the hollow shaft 161.

Among upper surface regions of the extension portion 151 of the stator housing 150, the second sub-board 12 is seated on an inner side between the first fixed sidewall 152 and the upper outer wall SW1, and the wireless power transmitting portion 13 and 14 of the wireless power transmission module M1 is coupled on an outer side thereof.

One or more bearing members 7 and 10 are coupled in a region between the hollow shaft 161 of the rotor housing 160 and the fixed sidewalls 152 and 153. The bearing members 7 and 10 may include a first bearing member 7 disposed between the hollow shaft 161 and the first fixed sidewall 152, and a second bearing member 10 disposed between the hollow shaft 161 and the second fixed sidewall 153. The first and second bearing members 7 and 10 support and guide axial rotation of the hollow shaft 161 positioned inside the fixed sidewalls 152 and 153 of the stator housing 150.

The first bearing member 7 is coupled to an inner circumference of the first fixed sidewall 152 of the stator housing 150, and the second bearing member 10 is coupled to an inner circumference of the second fixed sidewall 153 of the stator housing 150. An inner diameter of the first fixed sidewall 152 may be greater than an inner diameter of the second fixed sidewall 153. That is, a size of the first bearing member 7 may be greater than a size of the second bearing member 10, thereby stably guiding rotation of the hollow shaft 161.

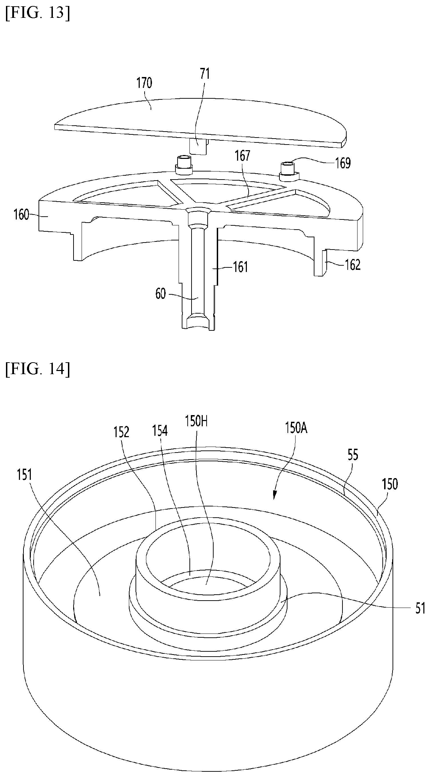

As illustrated in FIGS. 8 and 14, an upper circumference of the stator housing 150 includes a first fitting portion 55 and a lower circumference thereof includes a second fitting portion 56, and the first fitting portion 55 may be fitted with a lower circumference of the cover 140. The second fitting portion 56 may be fitted with a fitting protrusion 21 of the base 20.

The stator housing 150 separates accommodated components by using the internal extension portion 151 and the fixed sidewalls 152 and 153, thereby separating regions of heat-generating components such as coils, wireless power transmission coils, and boards around the extension portion 151 and the sidewalls, and effectively dissipating heat generated inside to the outside. Accordingly, deterioration in performance of the LIDAR device due to heat may be prevented, and deterioration in reliability due to high-temperature operation may be prevented.

As illustrated in FIGS. 11 and 12, the first bearing member 7 includes a first outer raceway K1, a first inner raceway K2, and a plurality of first bearings K3, and the plurality of first bearings K3 are arranged along a region between the first outer raceway K1 and the first inner raceway K2. The second bearing member 10 includes a second outer raceway K4, a second inner raceway K5, and a plurality of second bearings K6, and the plurality of second bearings K6 are arranged along a region between the second outer raceway K4 and the second inner raceway K4. An inner end 52 of the second fixed sidewall 153 of the stator housing 150 supports the second outer raceway K4 of the second bearing member 10.

An inner diameter of the second bearing member 10 may be smaller than an inner diameter of the first bearing member 7. Means B1 and B2 such as protrusions or grooves for coupling, or a bushing, may be disposed between the first outer raceway K2 of the first bearing member 7 and the first fixed sidewall 152. In such bearing members 7 and 10, two or three or more bearing members may be coupled around the shaft direction circumference of the hollow shaft 161.

The encoder modules 18 and 18A include an encoder disk 18 and a sensor 18A, and the sensor 18A is an optical sensor sensing an azimuth angle, is disposed on the first circuit board 19, and an inner portion of the encoder disk 18 is coupled to a lower circumference of the hollow shaft 161, and the encoder disk 18 may have a diameter facing the sensor 18A. The encoder modules 18 and 18A may detect a rotation direction and a position value according to a signal detected by the sensor 18A as the encoder disk 18 rotates. The fixing ring 17 may be disposed between the inner portion of the encoder disk 18 and the second inner raceway K4 of the second bearing member 10.

As illustrated in FIGS. 6 and 7, the rotor housing 160 is a rotating frame and may include a metal material, for example, an aluminum material. The rotor housing 160 includes a hollow shaft 161 vertically extending from an internal central portion toward the base 20, and the hollow shaft 161 includes a hollow 60 vertically penetrating therethrough. The rotor housing 160 includes a rotating sidewall 162 extending between the motor M2 and the wireless power transmission module M1. A magnet 5 and a yoke 6, which are rotors, are coupled inside the rotating sidewall 162, and the wireless power receiving portion 13 and 14 may be coupled to an outer side of the rotating sidewall 162 or to an outer lower surface of the rotor housing 160.

A hollow upper portion 61 and a hollow lower portion 62 of the hollow shaft 161 may have widths greater than an inner diameter of a region between the hollow upper portion 61 and the hollow lower portion 62. The first communication portion 71 of the first circuit board 19 is inserted into the hollow lower portion 62 of the hollow shaft 161, and the second communication portion 72 of the second circuit board 170 may be inserted into the hollow upper portion 61 of the hollow shaft 161. The first communication portion 71 includes a transmitting portion or light emitting portion wirelessly transmitting and receiving data and a receiving portion or optical sensor, and the second communication portion 72 may include a transmitting portion or light emitting portion and a receiving portion or optical sensor for transmission and reception for communication with the first communication portion 71.

Since the hollow shaft 161 is integrally provided in the rotor housing 160, a process of coupling or assembling a separate hollow shaft may not be required, and errors caused by assembly may be reduced. In addition, by integrally molding the hollow shaft 161 with the rotor housing 160, dispersion of a center due to axial rotation may be reduced, and deterioration in performance of the LIDAR device may be prevented.

In the hollow shaft 161, the hollow lower portion 62 may include a lower region having a diameter greater than an inner diameter of the hollow shaft 161, and an inclined region or a region having a gradually decreasing inner diameter at an upper portion of the lower region. Accordingly, insertion of the first communication portion 71 into the hollow lower portion 62 is facilitated, and signal interference may be reduced. The hollow upper portion 61 may include an upper region having a diameter greater than an inner diameter of the hollow shaft 161, and an inclined region or a region having a gradually decreasing inner diameter at a lower portion of the upper region. Accordingly, insertion of the second communication portion 72 into the hollow upper portion 61 is facilitated, and interference of communication signals may be reduced. Here, the first circuit board 19 may be spaced apart from the shaft 161 in a protruding direction of the shaft 161. A gap between a lower end of the shaft 161 and an upper surface of the first circuit board 19 may be smaller than a maximum thickness of each of the first and second communication portions 71 and 72.

The hollow shaft 161 of the rotor housing 160 passes through through-holes H1 and H2 of the bearing members 7 and 10 and a through-hole H3 of the encoder disk 18 and is disposed on the first circuit board 19 disposed on the base 20. At this time, the first communication portion 71 disposed on the first circuit board 19 is inserted into the hollow lower portion 62 of the hollow shaft 161.

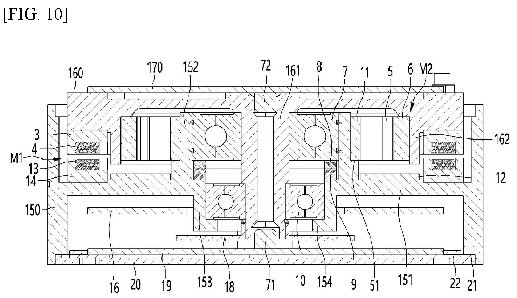

As illustrated in FIGS. 7 and 10, the hollow shaft 161 of the rotor housing 160 includes a first stopping protrusion 65 for spacing apart an upper end of the first bearing member 7 and an inner lower surface 160A of the rotor housing 160. The first stopping protrusion 65 may prevent the first inner raceway K2 of the first bearing member 7 from moving upwardly. The first stopping protrusion 65 may prevent the first inner raceway K2 of the first bearing member 7 from being brought into close contact with the inner lower surface 160A of the rotor housing 160 at an upper circumference of the hollow shaft 161. The first stopping protrusion 65 may be disposed around the hollow upper portion 61.

The hollow shaft 161 of the rotor housing 160 includes a second stopping protrusion 66, and the second stopping protrusion 66 may prevent an upper end of the second bearing member 10 from moving upwardly. The second stopping protrusion 66 has a stepped structure in which an outer surface of the hollow shaft 161 is stepped inwardly, and the second bearing member 10 is disposed on a lower portion of the second stopping protrusion 66. Due to such a stepped structure, an inner diameter of the second bearing member 10 may be smaller than an inner diameter of the first bearing member 7.

Elastic members 8 and 9 may be coupled in a region between an upper surface of the inner end 52 of the extension portion 151 of the stator housing 150 and the first outer raceway K1 of the first bearing member 7. An inner diameter of the elastic members 8 and 9 may be smaller than an outer diameter of the first bearing member 7, and the elastic members 8 and 9 may overlap the first outer raceway K1 of the first bearing member 7 in a vertical direction. The elastic members 8 and 9 may support the first bearing member 7 so as to prevent downward separation thereof. An outer circumferential surface of the shaft 161 may include grooves, that is, stepped grooves, accommodating at least one or all of the first and second bearing members 7 and 10. The elastic members 8 and 9 include first and second elastic members 8 and 9, and the first elastic member 8 is disposed between a circumference of the first outer raceway K1 of the first bearing member 7 and the second elastic member 9 and may maintain frictional force and distribute load. The second elastic member 9 is made of an elastic material maintaining preload on the first bearing member 7 and may be disposed between the first elastic member 8 and the upper surface of the inner end 52 of the extension portion 151 of the stator housing 150. The first and second elastic members 8 and 9 may include a ring shape, and the first elastic member 8 may be formed of a material different from that of the second elastic member 9 or may be a washer.

The second bearing member 10 is disposed in a region between the second fixed sidewall 153 of the stator housing 150 and the hollow shaft 161, and a lower portion of the second outer raceway K4 of the second bearing member 10 may be supported on a locking portion 154 of the second fixed sidewall 153. A fixing ring 17 is coupled between an inner upper end of the encoder disk 18 and the second bearing member 10. The fixing ring 17 may be fitted into a groove 69 at a lower outer circumference of the hollow shaft 161 and may include a snap ring.

The first and second bearing members 7 and 10 may be sequentially stacked from an outer upper portion of the shaft 161 toward the first circuit board 19. A width of the first bearing member 7 may be greater than a width of the second bearing member 10. An inner diameter of the first bearing member 7 may be greater than an inner diameter of the second bearing member 10. An outer diameter of the first bearing member 7 may be greater than an outer diameter of the second bearing member 10.

A third stopping protrusion 67 is disposed on an inner circumference of the rotor housing 160, and the third stopping protrusion 67 may prevent an upper end of the yoke 5 from being brought into close contact with an inner upper surface of the rotor housing 160. The yoke 5 is coupled to an inner surface of the rotating sidewall 162 of the rotor housing 160, and the receiving portion 3 and 4 of the wireless power transmission module M1 is spaced apart from the rotating sidewall 162 and may be coupled to an outer lower surface 165 of the rotor housing 160. As illustrated in FIG. 13, a plurality of ribs 167 are radially arranged on an upper portion of the rotor housing 160, guide seating of the second circuit board 170, and may prevent the second circuit board 170 from being brought into close contact with an upper surface of the rotor housing 160.

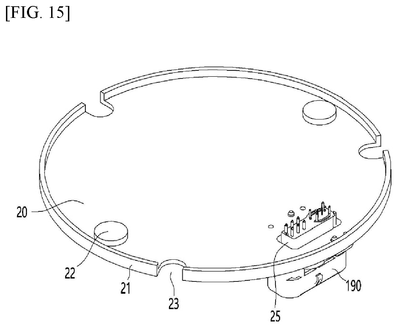

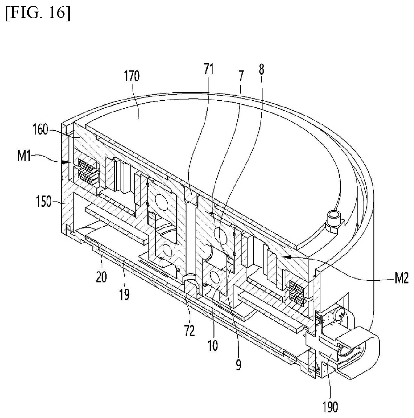

As illustrated in FIGS. 6, 10, and 15, the base 20 is coupled to a lower circumference of the stator housing 150 and may be fastened to a mobile body and/or the stator housing 150 by fastening means such as screws. An outer circumference of the base 20 has a fitting protrusion 21 and is fitted with the second fitting portion 56 at the lower circumference of the stator housing 150. A plurality of spacers 22 are disposed on an inner side of the base 20, and the plurality of spacers 22 space a lower surface of the first circuit board 19 apart from an upper surface of the base 20. The base 20 has a plurality of fastening holes 23, and fastening means such as screws may fix the first circuit board 19. A connector insertion hole 26 is provided in a portion of the base 20 such that an upper portion of the power connector 190 may be inserted therein. As illustrated in FIG. 16, as another example, the power connector 190 may be coupled to a sidewall of the stator housing 150.

The features, structures, effects, and the like described in the embodiments above are included in at least one embodiment of the invention and are not necessarily limited to only one embodiment. Furthermore, the features, structures, effects, and the like illustrated in each embodiment may be combined or modified with respect to other embodiments by those skilled in the art. Therefore, matters related to such combinations and modifications should be interpreted as being included within the scope of the invention. In addition, although the embodiments have been mainly described above, these are merely examples and do not limit the invention, and those skilled in the art to which the invention pertains will understand that various modifications and applications not exemplified above are possible without departing from the essential characteristics of the present embodiment. For example, each component specifically shown in the embodiment may be modified and implemented. Differences related to such modifications and applications should be interpreted as being included within the scope of the invention defined in the appended claims.

## Claims

1. A LIDAR driving device comprising:
a base;
a first circuit board disposed on the base;
a stator housing disposed on the first circuit board; and
a rotating portion including a rotor housing disposed on the stator housing and a second circuit board disposed on the rotor housing, and rotating with respect to the stator housing,
wherein the rotor housing includes a shaft protruding toward the first circuit board, disposed at an innermost side of the stator housing, and having a hollow, and
wherein at least one of the first circuit board and the second circuit board includes an optical communication portion performing optical communication through the hollow of the shaft.

2. The LIDAR driving device of claim 1,
wherein the optical communication portion includes a first communication portion having a first light emitting portion and a second optical sensor disposed at the first circuit board and disposed at a lower portion of the shaft, and a second communication portion having a second light emitting portion and a second optical sensor disposed at the second circuit board and disposed within the hollow of the shaft, and
wherein the first optical sensor receives an optical signal from the second light emitting portion, and the second optical sensor receives an optical signal from the first light emitting portion.

3. The LIDAR driving device of claim 2,
wherein at least one of the first light emitting portion and the first optical sensor at least partially overlaps the hollow of the shaft in a direction perpendicular to a direction in which the shaft protrudes.

4. The LIDAR driving device of any one of claims 1 to 3,
wherein the rotor housing rotates based on a virtual rotation axis disposed within the hollow of the shaft.

5. The LIDAR driving device of claim 4, further comprising:
a bearing member disposed between the stator housing and the rotor housing,
wherein the shaft, the bearing member, and the stator housing are sequentially disposed in an outward direction from the rotation axis.

6. The LIDAR driving device of claim 5,
wherein the bearing member includes a first bearing member and a second bearing member sequentially disposed from an outer upper end of the shaft toward the first circuit board, and
wherein a width of the first bearing member is greater than a width of the second bearing member.

7. The LIDAR driving device of claim 5,
wherein an outer circumferential surface of the shaft includes a groove accommodating the bearing member, and
wherein the bearing member is disposed between the shaft and the stator housing.

8. The LIDAR driving device of any one of claims 1 to 3, further comprising:
an encoder disk coupled to a lower circumference of the shaft; and
a sensor disposed on the first circuit board, facing the encoder disk, and sensing an azimuth angle.

9. The LIDAR driving device of any one of claims 1 to 3,
wherein a lower end of the shaft is spaced apart from an upper surface of the first circuit board, and
wherein a gap between the first circuit board and the lower end of the shaft is smaller than the maximum thickness of the communication portion.

10. The LIDAR driving device of any one of claims 1 to 3,
wherein a rotation axis of the rotor housing is the same as a central axis of the shaft.

11. The LIDAR driving device of any one of claims 1 to 3,
wherein the second circuit board is disposed on the rotor housing and rotates together with the rotor housing, and
wherein the lidar driving device further comprises a motor coupled to the stator housing and the rotor housing and rotating the rotor housing about an axis.

12. The LIDAR driving device of claim 11,
wherein the stator housing includes an extension portion extending from an outer wall toward the shaft of the rotor housing, a first fixed sidewall protruding from the extension portion toward the rotor housing or upwardly, and a second fixed sidewall protruding from the first fixed sidewall toward the base,
wherein the rotor housing has a disk shape at an upper circumference of the hollow shaft and includes a rotating sidewall at a lower circumference thereof, and
wherein the motor is disposed between the first fixed sidewall and the rotating sidewall.

13. The LIDAR driving device of claim 12, further comprising:
a wireless power transmission module coupled to the stator housing and the rotor housing,
wherein the wireless power transmission module includes a wireless power transmitting portion disposed on an outer circumference of the extension portion of the stator housing, and a wireless power receiving portion disposed at an outer lower portion of the rotor housing.

14. The LIDAR driving device of claim 5,
wherein the stator housing includes a first fixed sidewall protruding toward the rotor housing or upwardly, and a second fixed sidewall protruding from the first fixed sidewall toward the base, and
wherein the bearing member includes a first bearing member coupled between the first fixed sidewall and the hollow shaft, and a second bearing member coupled between the second fixed sidewall and the hollow shaft.

15. A LIDAR device comprising:
a transceiver including a light emitting portion emitting an optical signal and a light receiving portion receiving the optical signal reflected from an object; and
a driving device controlling rotation of the transceiver,
wherein the driving device includes:
a first circuit board including a first light emitting portion emitting a first optical signal and a first optical sensor receiving a second optical signal;
a second circuit board including a second optical sensor receiving the first optical signal and a second light emitting portion emitting the second optical signal, and electrically connected to the transceiver;
a shaft disposed between the first circuit board and the second circuit board, fixed together with the second circuit board, and spaced apart from the first circuit board;
a stator housing having the first circuit board;
a rotor housing having the shaft and supporting the second circuit board; and
a bearing member, a wireless power transmission module, and a motor respectively disposed between the stator housing and the rotor housing,
wherein the shaft has a hollow,
wherein the first light emitting portion and the first optical sensor are disposed at a lower portion of the shaft, and
wherein the second light emitting portion and the second optical sensor are disposed within the hollow of the shaft.
